# FASCICULE DE BREVET EUROPEEN

(11) **EP 2 185 986 B1**
(45) Date de publication et mention de la délivrance du brevet: **08.06.2011**
(21) Numéro de dépôt: 08830934.9
(22) Date de dépôt: 22.08.2008
(51) Int. Cl.: G05B 23/02

(54) **PROCEDE DE TRAITEMENT D'UNE REQUETE D'EFFACEMENT D'UN CODE DE DEFAUT STOCKE EN MEMOIRE D'UN CALCULATEUR EMBARQUE A BORD D'UN VEHICULE AUTOMOBILE, ET PROCEDE ET SYSTEME D'AIDE A LA MAINTENANCE D'UN TEL VEHICULE**
VERFAHREN ZUR VERARBEITUNG EINER ANFORDERUNG ZUM LÖSCHEN EINES DEFEKTEN CODES, DER IM SPEICHER EINES RECHNERS AN BORD EINES AUTOMOBILS GESPEICHERT IST, SOWIE VERFAHREN UND SYSTEM ZUR WARTUNGSHILFE EINES SOLCHEN FAHRZEUGS
METHOD FOR PROCESSING A REQUEST FOR ERASING A DEFECT CODE STORED IN THE MEMORY OF A CALCULATOR ONBOARD AN AUTOMOBILE, AND METHOD AND SYSTEM FOR MAINTENANCE ASSISTANCE OF SUCH VEHICLE

(30) Priorité: 12.09.2007 FR 0757518
(43) Date de publication de la demande: 19.05.2010
(73) Titulaire: Peugeot Citroën Automobiles SA, 78140 Vélizy-Villacoublay (FR)
(72) Inventeur: LOPEZ, Thierry, F-78700 Conflans-Ste-Honorine (FR)
(74) Mandataire: Ménès, Catherine
(86) Numéro de dépôt international: PCT/FR2008/051522
(87) Numéro de publication internationale: WO 2009/034280

(56) Documents cités:
- EP-A- 0 631 213
- US-A- 5 671 141

## Description

La présente invention concerne un procédé de traitement d'une requête d'effacement d'un code de défaut stocké en mémoire d'un calculateur embarqué à bord d'un véhicule automobile, et un procédé et un système d'aide à la maintenance d'un tel véhicule.

Pour le réseau après-vente d'un constructeur automobile en charge de la maintenance des véhicules, la croissance de l'électronique embarquée à engendré une complexité suivant une courbe de type exponentiel.

Face à cela, chaque constructeur a développé progressivement et continue de développer des fonctions d'autodiagnostic toujours plus performantes permettant de signaler les anomalies détectées par le système embarqué lui-même.

Historiquement, les calculateurs d'un véhicule automobile ont commencé par embarquer des stratégies liées aux pannes électriques des capteurs ou actionneurs connectés au système, puis de plus en plus de diagnostics dits fonctionnels mettant en jeu une chaîne d'éléments associée à des conditions spécifiques d'environnement.

EP 631 213 décrit un système de diagnostic d'un véhicule.

Aujourd'hui, un opérateur de maintenance d'un véhicule automobile dispose de tout un panel d'indicateurs affectés à des pannes distinctes (on parle généralement de codes défauts ou DTC pour "Diagnostic Trouble Codes").

Cependant, ces indicateurs ne localisent pas toujours la pièce à changer, en particulier lorsqu'il s'agit de diagnostics fonctionnels où un même élément intervient dans de multiples chaînes de traitement, mais « aiguillent » simplement l'opérateur sur certains éléments pouvant intervenir dans le symptôme rencontré.

Compte tenu de l'historique de la réparation et des fonctionnalités de maintenance embarquées, lorsqu'un client se plaint d'un symptôme sur son véhicule, la séquence des opérations se résume très souvent à la séquence suivante :
1) Identification du calculateur à interroger suite à la description du symptôme faite par le client (exemple : mon véhicule subit une perte de puissance orientant de fait l'opérateur vers le calculateur de contrôle moteur).
2) Mise sous tension de l'ensemble.
3) Transmission depuis un outil de diagnostic d'une requête de lecture des codes défauts mémorisés dans le calculateur identifié.
4) Identification du défaut pertinent lorsque plusieurs codes défauts sont en mémoire (certains défauts peuvent en effet être des défauts induits par la cause principale).
5) Transmission depuis un outil de diagnostic d'une requête d'effacement de l'ensemble des défauts en mémoire dans le calculateur.
6) Coupure de tension de l'ensemble.
7) Changement de la pièce incriminée (exemple : changement du turbo).
8) Remise de l'ensemble sous tension.
9) Transmission depuis l'outil de diagnostic d'une requête de lecture des codes défauts dans le calculateur identifié afin de s'assurer que ceux-ci n'ont pas été détectés à nouveau et mémorisés.

Cette procédure offre de bons résultats pour les diagnostics de type électrique, en cas de court-circuit d'un actionneur par exemple, le temps de détection de la défaillance est extrêmement réduit et ce temps est de plus masqué par celui pris par l'opérateur sur l'outil de diagnostic pour interroger à nouveau le calculateur après changement de la pièce incriminée (opération 9). Lorsque la pièce changée lors de l'intervention (opération 7) ne s'avère pas être la bonne pièce à changer, un nouveau code défaut (le même que celui identifié lors de l'opération 4) est présent en mémoire du calculateur.

Cette méthode n'apporte cependant pas un résultat satisfaisant pour les diagnostics fonctionnels. Or, compte-tenu de la complexité des systèmes mis en oeuvre ce sont ces derniers qui augmentent le plus dans les véhicules modernes soumis à des règlements toujours plus contraignants en particulier ceux qui touchent à la sécurité et à l'environnement.

La raison principale en est que la plupart des diagnostics fonctionnels ne peuvent être réalisés que dans des conditions particulières de fonctionnement du véhicule (le diagnostic de la pompe IAE n'est par exemple réalisé par le système que lorsque la fonction est activée ; d'autres diagnostics nécessitent des conditions encore plus spécifiques : température de fonctionnement atteinte et sollicitation d'éléments particuliers).

Or, ces conditions ne sont d'une part pas toujours connues de manière exhaustive par l'opérateur, et sont d'autre part difficilement reproductibles dans les conditions de la réparation (prenons par exemple le cas d'une défaillance dont le symptôme n'apparaîtrait qu'en altitude lorsqu'un niveau de pression atmosphérique serait atteint).

Dans le cas du changement d'un élément d'une chaîne, une aide précieuse pour le réparateur serait de disposer d'un indicateur remonté par le système embarqué lui apportant la garantie que l'opération de maintenance réalisée est bien la bonne (le défaut vu précédemment a bien été corrigé et le symptôme remonté par le client ne va pas se reproduire).

De plus, pour protéger le client et le matériel, les constructeurs de véhicules développent et embarquent des modes dégradés associés aux défaillances de gravités 3 et 4 (la gravité 4 correspond aux défauts les plus graves mettant en jeu la sécurité et la gravité 3 aux défauts rendant indisponible le véhicule). Ces modes dégradés consistent par exemple à limiter le régime moteur afin de diminuer les sollicitations matérielles tout en permettant au client de rejoindre la concession la plus proche. Dans les calculateurs de la génération actuelle, l'effacement des codes défauts réalisé au moyen de la transmission d'une requête depuis un outil de diagnostic vers le calculateur supprime aussi les modes dégradés associés. La gamme utilisée concoure ainsi à supprimer pendant l'opération de maintenance et ce jusqu'à la prochaine détection possible, un mode dégradé précédemment engagé pour assurer la protection (du client et/ou du matériel).

Le but de l'invention est de résoudre ces problèmes.

A cet effet, l'invention concerne un procédé de traitement d'une requête d'effacement d'un code de défaut stocké dans un calculateur embarqué à bord d'un véhicule automobile, caractérisé en ce qu'il comporte les étapes suivantes :
- réception par le calculateur de la requête d'effacement,
- inhibition de l'ensemble des stratégies de détection nominale des défauts par le calculateur,
- lancement de la stratégie de détection du défaut concerné par la requête d'effacement en utilisant un modèle stocké dans le calculateur des conditions d'environnement simulées représentatives des conditions de détection initiales du défaut,
- analyse du résultat du lancement de la stratégie de détection pour :
   1. inhiber la requête d'effacement si le défaut est détecté à nouveau, ou
   2. valider la requête d'effacement si le défaut n'est pas détecté à nouveau, et
- effacement du code de défaut en mémoire du calculateur.

Suivant un mode particulier de réalisation, l'étape d'effacement du code de défaut comporte également l'effacement d'un mode dégradé associé.

L'invention concerne également un procédé d'aide à la maintenance d'un véhicule automobile du type comportant un outil de diagnostic adapté pour être raccordé à un réseau de transmission d'informations du véhicule automobile, auquel est également raccordé au moins un calculateur embarqué, caractérisé en ce que ledit calculateur est adapté pour mettre en oeuvre un procédé de traitement d'une requête tel que décrit précédemment pour le traitement d'une requête d'effacement émise par l'outil de diagnostic.

L'invention concerne également un système d'aide à la maintenance d'un véhicule automobile du type comportant un outil de diagnostic adapté pour être raccordé à un réseau de transmission d'informations du véhicule, auquel est également raccordé au moins un calculateur embarqué et comportant :
- des moyens de réception de la requête,
- des moyens d'inhibition de l'ensemble des stratégies de détection nominale des défauts par le calculateur,
- des moyens de lancement de la stratégie de détection du défaut concerné par la requête d'effacement en utilisant un modèle stocké dans le calculateur des conditions d'environnement simulées représentatives des conditions de détection initiales du défaut,
- des moyens d'analyse du résultat du lancement de la stratégie de détection pour inhiber la requête d'effacement si le défaut est détecté à nouveau ou valider celle-ci si le défaut n'est pas détecté, et
- des moyens d'effacement du code de défaut en mémoire du calculateur.

L'invention sera mieux comprise à l'aide de la description qui va suivre, donnée uniquement à titre d'exemple et faite en se référant aux dessins annexés, sur lesquels :
- la figure 1 illustre le traitement d'une requête d'effacement mise en oeuvre dans l'état de la technique ; et
- la figure 2 illustre le traitement d'une requête d'effacement selon l'invention.

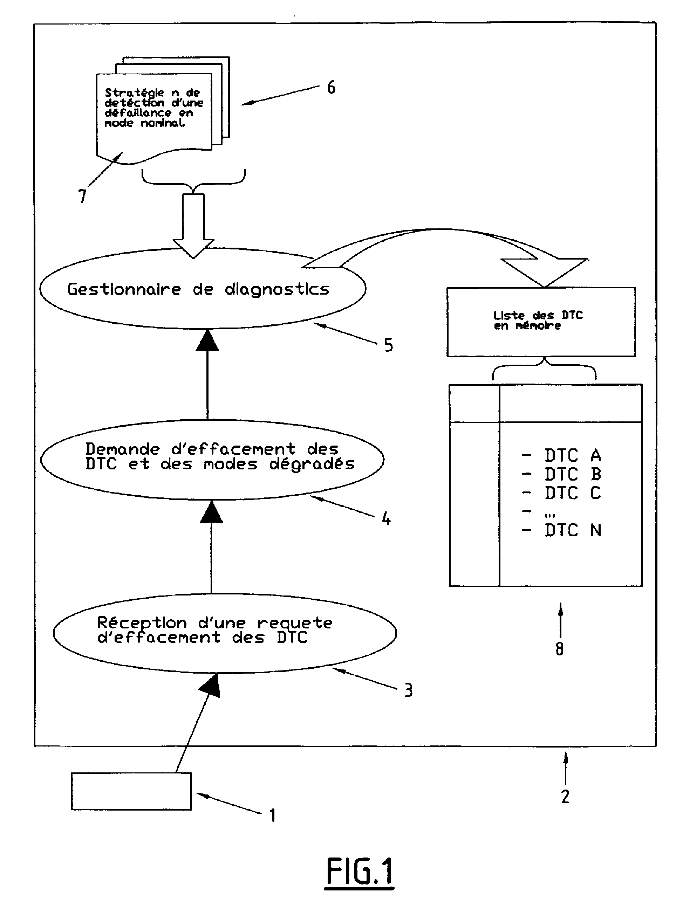

On a en effet illustré sur la figure 1, le traitement d'une requête d'effacement d'un code de défaut tel qu'il est actuellement mis en oeuvre dans l'état de la technique.

En fait, cette requête d'effacement est par exemple émise par un outil de diagnostic désigné par la référence générale 1 sur cette figure à destination d'un calculateur embarqué tel que désigné par la référence générale 2.

En fait, de tels outils de diagnostic sont mis en oeuvre pour assurer l'aide à la maintenance des véhicules automobiles et comprennent par exemple des moyens de raccordement sur un réseau de transmission d'informations embarqué à bord du véhicule et auxquels le calculateur concerné est raccordé de même que d'autres calculateurs.

Ainsi, un système d'aide au diagnostic pour véhicule automobile comporte au moins un calculateur embarqué et un réseau tel que par exemple un réseau de type CAN adapté pour être connecté à l'outil de diagnostic et permettant sur réception d'une requête d'effacement de défaut de déclencher une séquence préalable d'opérations depuis un logiciel interne du calculateur.

En fait et selon cette figure 1, la requête d'effacement du code de défaut émise par l'outil de diagnostic est reçue en 3 dans le calculateur embarqué qui émet alors en 4 à destination d'un gestionnaire de diagnostics 5 une demande d'effacement correspondante. Ce gestionnaire de diagnostics est raccordé d'une part à des moyens de stockage 6 de stratégies de détection d'une défaillance en mode nominal tel que celle illustrée par la référence 7 sur cette figure et peut également accéder aux codes de défaut stockés en mémoire du calculateur telle que par exemple désignée par la référence générale 8 sur cette figure.

Comme cela a été indiqué précédemment dans l'état de la technique, l'effacement se fait de façon directe, ce qui présente les inconvénients mentionnés.

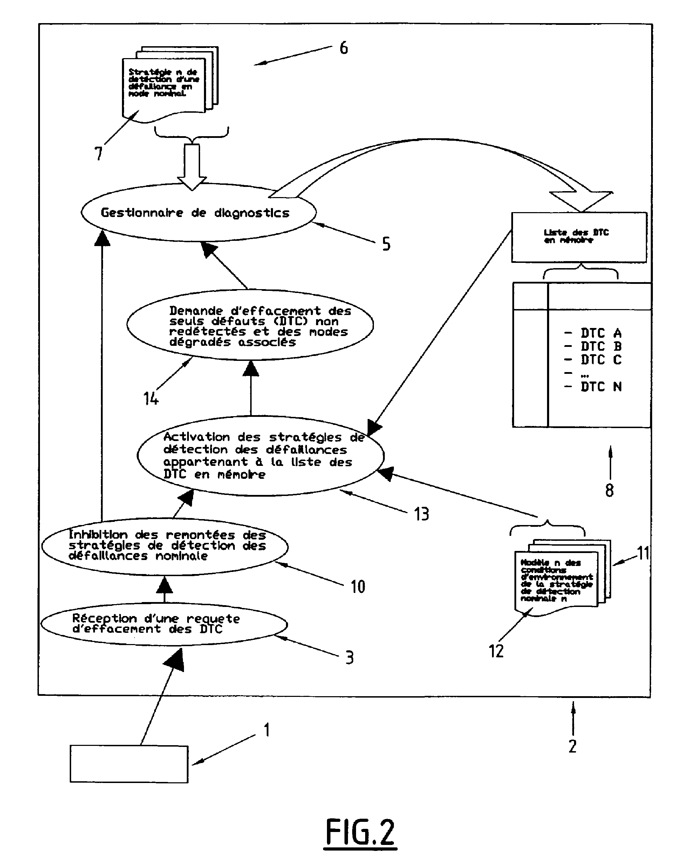

On a illustré sur la figure 2, le traitement d'une requête d'effacement selon l'invention.

On reconnaît en effet sur cette figure 2, l'outil de diagnostic désigné par la référence générale 1, le calculateur embarqué désigné par la référence générale 2, l'étape de réception de la requête d'effacement 3, le gestionnaire de diagnostics 5, les moyens de stockage 6 et les différentes stratégies 7, de même que les moyens de stockage 8 de la liste des codes de défauts.

En fait selon l'invention, le calculateur embarque également pour chaque diagnostic fonctionnel par exemple, un modèle environnemental correspondant aux conditions de détection d'une défaillance, utilisé pour la stratégie de diagnostic associée. Ce modèle permet alors de simuler depuis le logiciel interne au calculateur, lors d'une activation particulière de la stratégie fonctionnelle d'un diagnostic donné (dans la concession pendant l'opération de maintenance), en dehors du fonctionnement nominal du véhicule, les conditions d'environnement véhicule permettant à la stratégie de se placer dans les conditions de détection du défaut lors de l'utilisation du véhicule par le client.

Bien entendu, il est envisageable, compte tenu des contraintes industrielles associées au coût et à la taille de mémoire disponible dans les calculateurs, de ne développer cette nouvelle fonctionnalité que pour certains diagnostics particuliers jugés critiques et de conserver les modes de fonctionnement associés aux autres diagnostics conformes à ce qui était connu dans l'état de la technique.

Ainsi et comme cela est illustré sur cette figure 2, sur réception en 3 d'une requête d'effacement transmise par exemple par un opérateur de maintenance depuis l'outil de diagnostic, une telle requête ne devant être prise en compte par le système que moteur non tournant et véhicule non roulant, le logiciel interne du calculateur commence par inhiber l'ensemble des stratégies de détection nominale des défauts comme cela est illustré en 10 sur cette figure 2.

Puis il lance uniquement le ou les diagnostics liés aux codes de défaut stockés en mémoire c'est-à-dire ceux qui ont été mémorisés lors de l'utilisation du véhicule par le client, et ce en fonction de l'environnement simulé représentatif des conditions de détection de la ou des défaillances à partir de moyens 11 de stockage de modèles de conditions d'environnement de stratégies de détection nominale tel que celui désigné par la référence générale 12.

L'activation des stratégies de détection des défaillances appartenant à la liste des défauts stockés en mémoire est quant à elle désignée par la référence générale 13 sur cette figure.

Pour chaque diagnostic ainsi réalisé, et en fonction du résultat obtenu c'est-à-dire défaut non détecté ou défaut détecté, le code de défaut et le mode dégradé associé éventuellement seront ou non effacés de la mémoire interne du calculateur. Tous les défauts qui n'auront pas été détectés à nouveau seront alors effacés et leur mode dégradé associé supprimé et tous ceux qui auront été détectés à nouveau ne seront pas effacés de la mémoire c'est-à-dire que le calculateur après analyse des résultats du lancement de la stratégie de détection inhibera la requête d'effacement si le défaut est détecté à nouveau ou validera cette requête d'effacement si le défaut n'est pas détecté à nouveau pour déclencher l'effacement du code de défaut en mémoire du calculateur comme cela est illustré en 14 sur cette figure 2.

Une différence fondamentale avec ce qui est pratiqué dans l'état de l'art actuel réside dans le fait que dans l'état de la technique, une demande d'effacement des défauts supprime toujours les codes de défaut en mémoire d'un calculateur alors que dans l'invention proposée, cet effacement reste conditionné à la non redétection d'un défaut et est réalisé par le logiciel interne du calculateur.

Le principal avantage pour l'opérateur est d'être certain après avoir réalisé une intervention que l'autodiagnostic du calculateur a réalisé le diagnostic du défaut incriminé et d'être assuré que ce dernier n'est plus vu par le système avant de rendre le véhicule au client. Ceci contribue à diminuer le temps d'intervention ainsi que les coûts associés (pour le client ou le constructeur dans le cadre de la garantie légale du véhicule).

Un autre avantage lié à ce procédé est que le mode dégradé associé à un défaut ne sera pas supprimé tant que la réparation n'aura pas été vue par le système comme bonne, garantissant ainsi la préservation du matériel par le fait que la protection mise en oeuvre n'est jamais inhibée par une action externe.

Dans le cadre de cette invention, la séquence des opérations de maintenance devient alors la suivante :
1) Identification du calculateur à interroger suite à la description du symptôme faite par le client (exemple : mon véhicule subit une perte de puissance orientant de fait l'opérateur vers le calculateur de contrôle moteur).
2) Mise sous tension de l'ensemble.
3) Transmission depuis un outil de diagnostic d'une requête de lecture des codes défauts mémorisés dans le calculateur identifié.
4) Identification du défaut pertinent lorsque plusieurs codes défauts sont en mémoire (certains défauts peuvent en effet être des défauts induits par la cause principale).
5) Coupure de tension de l'ensemble.
6) Changement de la pièce incriminée (exemple : changement du turbo).
7) Remise sous tension de l'ensemble.
8) Transmission depuis un outil de diagnostic d'une requête d'effacement de l'ensemble des défauts en mémoire dans le calculateur.
9) Inhibition par le logiciel interne du calculateur des stratégies de détection nominale des défaillances.
10) Activation des routines de diagnostic relatives aux diagnostics dont un code défaut a été mémorisé avec environnement simulé reproduisant les conditions véhicule nominales d'activation des diagnostics.
11) Effacement des codes défauts en mémoire (en automatique par le logiciel) dès lors que la stratégie confirme que le défaut n'est plus détecté et suppression du mode dégradé associé.
12) Transmission depuis un outil de diagnostic d'une requête de lecture des codes défauts dans le calculateur identifié afin de s'assurer que ceux-ci n'ont pas été détectés à nouveau et mémorisés.

Ainsi, l'invention apporte une aide à l'opérateur de maintenance pour réparer « bon » contribuant ainsi à diminuer/minimiser les coûts pour le client mais également pour le constructeur dans le cadre de la garantie légale du véhicule.

L'invention permet également de maintenir le matériel protégé tant que la réparation n'est pas vue comme étant bonne par le système en raison de la non suppression du mode dégradé associé à la défaillance détectée.

## Revendications

1. Procédé de traitement d'une requête d'effacement d'un code de défaut stocké dans un calculateur (2) embarqué à bord d'un véhicule automobile, **caractérisé en ce qu'**il comporte les étapes suivantes :
- réception (3) par le calculateur (2) de la requête d'effacement,
- inhibition (10) de l'ensemble des stratégies de détection nominale des défauts par le calculateur,
- lancement (13) de la stratégie de détection du défaut concerné par la requête d'effacement en utilisant un modèle (12) stocké dans le calculateur (11) des conditions d'environnement simulées représentatives des conditions de détection initiales du défaut,
- analyse (13, 14) du résultat du lancement de la stratégie de détection pour :
1. inhiber la requête d'effacement si le défaut est détecté à nouveau, ou
2. valider la requête d'effacement si le défaut n'est pas détecté à nouveau, et
- effacement du code de défaut en mémoire du calculateur (8).

2. Procédé de traitement selon la revendication 1, **caractérisé en ce que** l'étape d'effacement du code de défaut comporte également l'effacement d'un mode dégradé associé.

3. Procédé d'aide à la maintenance d'un véhicule automobile du type comportant un outil de diagnostic (1) adapté pour être raccordé à un réseau de transmission d'informations du véhicule automobile, auquel est également raccordé au moins un calculateur embarqué (2), **caractérisé en ce que** ledit calculateur (2) est adapté pour mettre en oeuvre un procédé de traitement d'une requête selon l'une quelconque des revendications précédentes pour le traitement d'une requête d'effacement émise par l'outil de diagnostic (1).

4. Système d'aide à la maintenance d'un véhicule automobile du type comportant un outil de diagnostic (1) adapté pour être raccordé à un réseau de transmission d'informations du véhicule, auquel est également raccordé au moins un calculateur embarqué (2) et comportant :
- des moyens (3) de réception de la requête,
- des moyens (10) d'inhibition de l'ensemble des stratégies de détection nominale des défauts par le calculateur,
- des moyens (13) de lancement de la stratégie de détection du défaut concerné par la requête d'effacement en utilisant un modèle stocké (12) dans le calculateur des conditions d'environnement simulées représentatives des conditions de détection initiales du défaut,
- des moyens d'analyse (13, 14) du résultat du lancement de la stratégie de détection pour inhiber la requête d'effacement si le défaut est détecté à nouveau ou valider celle-ci si le défaut n'est pas détecté, et
- des moyens (14, 5) d'effacement du code de défaut en mémoire (8) du calculateur (2)

## Claims

1. Method for processing a request for deletion of a defect code stored in a computer (2) on board a motor vehicle, **characterized in that** it comprises the following steps:
- reception (3) by the computer (2) of the deletion request,
- inhibition (10) of all the strategies of nominal detection of defects by the computer,
- initiation (13) of the strategy for detection of the defect concerned by the deletion request, using a model (12) stored in the computer (11) of the simulated environmental conditions representative of the initial detecting conditions of the defect,
- analysis (13, 14) of the result of the initiation of the detection strategy for:
1) inhibiting the deletion request if the defect is detected again, or
2) validating the deletion request if the defect is not detected again,
and
- deletion of the defect code in the memory of the computer (8).

2. Method for processing according to Claim 1, **characterized in that** the deletion stage of the defect code also comprises the deletion of an associated degraded mode.

3. Method for assisting the maintenance of a motor vehicle of the type comprising a diagnostic tool (1) suited to be connected to a data transmission network of the motor vehicle, to which at least one on-board computer (2) is also connected, **characterized in that** the said computer (2) is suited to implement a method for processing a request according to any one of the preceding claims for the processing of a deletion request emitted by the diagnostic tool (1).

4. System for assisting the maintenance of a motor vehicle of the type comprising a diagnostic tool (1) suited to be connected to a data transmission network of the vehicle, to which at least one on-board computer (2) is also connected, and comprising:
- means (3) for receiving the request,
- means (10) for inhibiting all of the strategies for nominal detection of the defects by the computer,
- means (13) for initiating the detection strategy of the defect concerned by the deletion request using a stored model (12) in the computer of the simulated environmental conditions representative of the initial detection conditions of the defect,
- means (13, 14) for analysis of the result of the initiation of the detection strategy to inhibit the deletion request if the defect is detected again or to validate it if the defect is not detected, and
- means (14, 5) for deleting the defect code in the memory (8) of the computer (2).

## Patentansprüche

1. Verfahren zum Verarbeiten einer Anfrage zum Löschen eines Fehlercodes, der in einem Rechner (2) gespeichert ist, der an Bord eines Kraftfahrzeugs mitgeführt wird, **dadurch gekennzeichnet, dass** es die folgenden Schritte aufweist:
- Empfang (3) durch den Rechner (2) der Löschanfrage,
- Inhibieren (10) aller Strategien zum nominalen Erfassen der Fehler durch den Rechner,
- Starten (13) der Strategie zum Erfassen des von der Löschanfrage betroffenen Fehlers unter Verwendung eines Modells (12), das in dem Rechner (11) der simulierten Umgebungsbedingungen, die für ursprüngliche Erfassungsbedingungen des Fehlers repräsentativ sind, gespeichert ist,
- Analyse (13, 14) des Ergebnisses des Startens der Erfassungsstrategie, um:
1) die Löschanfrage zu inhibieren, wenn der Fehler erneut erfasst wird, oder
2) die Löschanfrage zu bestätigen, wenn der Fehler nicht erneut erfasst wird,
und
- Löschen des Fehlercodes im Speicher des Rechners (8).

2. Verfahren zum Verarbeiten nach Anspruch 1, **dadurch gekennzeichnet, dass** der Schritt des Löschens des Fehlercodes auch das Löschen eines dazugehörenden Schadbetriebs umfasst.

3. Verfahren zum Unterstützen der Wartung eines Kraftfahrzeugs des Typs, der ein Diagnosewerkzeug (1) aufweist, das an ein Datenübertragungsnetzwerk des Kraftfahrzeugs angeschlossen werden kann, an das auch mindestens ein mitgeführter Rechner (2) angeschlossen ist, **dadurch gekennzeichnet, dass** der Rechner (2) ein Verfahren zum Verarbeiten einer Anfrage nach einem der vorhergehenden Ansprüche für die Verarbeitung einer Löschanfrage, die von dem Diagnosewerkzeug (1) ausgegeben wird, umsetzen kann.

4. System zur Unterstützung der Wartung eines Kraftfahrzeugs des Typs, der ein Diagnosewerkzeug (1) aufweist, das an ein Datenübertragungsnetzwerk des Fahrzeugs angeschlossen werden kann, an das auch mindestens ein mitgeführter Rechner (2) angeschlossen ist und Folgendes aufweist:
- Mittel (3) zum Empfangen der Anfrage,
- Mittel (10) zum Inhibieren aller Strategien zum nominalen Erfassen der Fehler durch den Rechner,
- Mittel (13) zum Starten der Strategie zum Erfassen des von der Löschanfrage betroffenen Fehlers unter Einsatz eines Modells (12), das in dem Rechner der simulierten Umgebungsbedingungen, die für die ursprünglichen Erfassungsbedingungen des Fehlers repräsentativ sind, gespeichert ist,
- Mittel zur Analyse (13, 14) des Ergebnisses des Startens der Erfassungsstrategie zum Inhibieren der Löschanfrage, wenn der Fehler erneut erfasst wird, oder um diese zu bestätigen, wenn der Fehler nicht erfasst wird, und
- Mittel (14, 5) zum Löschen des Fehlercodes im Speicher (8) des Rechners (2).
